# EUROPÄISCHE PATENTSCHRIFT

(11) **EP 2 796 238 B1**
(45) Veröffentlichungstag und Bekanntmachung des Hinweises auf die Patenterteilung: **06.07.2016**
(21) Anmeldenummer: 14160925.5
(22) Anmeldetag: 20.03.2014
(51) Int. Cl.: B23Q 7/03, B23Q 17/22, G01P 1/04, B27C 1/12

(54) **Messvorrichtung und Holzbearbeitungsanlage mit einer solchen Messvorrichtung**
Measuring device and wood-working machine with such a measuring device
Dispositif de mesure et installation de traitement du bois dotée d'un tel dispositif de mesure

(30) Priorität: 26.04.2013 DE 102013104241
(43) Veröffentlichungstag der Anmeldung: 29.10.2014
(73) Patentinhaber: Hundegger, Hans, 87749 Hawangen (DE)
(72) Erfinder: Hundegger, Hans, 87749 Hawangen (DE)
(74) Vertreter: Charrier Rapp & Liebau

(56) Entgegenhaltungen:
- EP-A1- 0 185 788
- DE-A1-102006 008 657
- FR-A1- 2 128 182
- US-A- 3 182 877

## Beschreibung

Die Erfindung betrifft eine Messvorrichtung zur Erfassung der Vorschubbewegung eines zu bearbeitenden Werkstücks nach dem Oberbegriff des Anspruchs 1. Die Erfindung betrifft außerdem eine Holzbearbeitungsanlage mit einer solchen Messvorrichtung.

Eine solche Messvorrichtung ist aus EP 0185788 A1 bekannt.

Eine derartige Messvorrichtung ist aus der DE 20 2011 105 077 U1 bekannt. Dort wird die Vorschubbewegung eines Werkstücks durch eine Riemenanordnung mit einem über Umlenkrollen geführten und an das Werkstück angedrückten Riemen erfasst. Hierzu wird der Riemen durch die mit diesen mitbewegte Andruckelemente z.B. an die Unterseite eines auf einer Werkstückauflage in Längsrichtung bewegten Werkstücks angedrückt. Durch die mit dem Riemen mitbewegten Andruckelemente kann der Riemen zur Erzielung einer schlupffreien Verbindung mit dem Werkstück an dieses angepresst werden, ohne dass eine Gleitreibung zwischen dem Andruckelement und dem Riemen auftritt. An mindestens einer der Umlenkscheiben des Riemens kann ein Sensor oder eine andere geeignete Einrichtung zur Erfassung deren Drehbewegung angeordnet sein. Durch Erfassung der Drehbewegung der vom Werkstück über den Riemen angetriebenen Umlenkscheibe kann so die Bewegung des Werkstücks erfasst und schlupffrei gemessen werden. Allerdings weist die Riemenanordnung bei dieser bekannten Messvorrichtung nur beschränkte Bewegungsmöglichkeiten auf, was besonders bei unregelmäßig geformten Werkstücken zu Messungenauigkeiten führen kann.

Aus der EP 0 185 788 A1 ist zudem eine Kabeltransporteinrichtung für ein Kabeltabläng- und Kabelisoliervorrichtung bekannt. Diese weist einen an einem Träger über Umlenkscheiben geführten Zahnriemen auf, der gegen ein zu transportierendes Kabel gedrückt wird. Um einen möglichst gleichmäßigen Anpressdruck auf das Kabel zu erreichen, sind zwischen den Umlenkrollen weitere Anpressrollen vorgesehen. Der Träger ist zudem an einer Halterung um eine zur Bewegungsrichtung des Zahnriemens rechtwinklige Schwenkachse drehbar, so dass dieser eine Pendelbewegung ausführen kann. Zur Vorschubmessung des Kabels ist vor der Kabeltransporteinrichtung des Weiteren ein als Messrolle ausgebildeter Sensor vorgesehen, mit dem die Länge des durchtretenden Kabels bestimmbar ist.

Aufgabe der Erfindung ist es, eine Messvorrichtung und eine mit einer solchen Messeinrichtung ausgestattete Holzbearbeitungsanlage zu schaffen, die eine möglichst genaue Erfassung der Vorschubbewegung eines Werkstücks ermöglichen.

Diese Aufgabe wird durch eine Messeinrichtung mit den Merkmalen des Anspruchs 1 und durch eine Holzbearbeitungsanlage mit den Merkmalen des Anspruchs 12 gelöst. Zweckmäßige Weiterbildungen und vorteilhafte Ausführungsformen der Erfindung sind Gegenstand der Unteransprüche.

Bei der erfindungsgemäßen Messeinrichtung umfasst die mit dem Riemen bzw. der Kette mitbewegte Andruckeinrichtung mehrere durch Kettenlaschen zu einer Endloskette miteinander verbundene und über mindestens zwei Kettenumlenkräder geführte Andruckelemente. Die beiden in einer Ebene liegenden Kettenumlenkräder sind zweckmäßigerweise in einer Ebene zwischen den beiden Umlenkscheiben des Riemens derart angeordnet, dass die Andruckelemente zur Anlage an der Innenseite des zwischen den beiden Umlenkscheiben angeordneten Anlagetrums des Riemens gelangen. Dadurch dass sich die Andruckelemente mit dem Riemen oder der Kette mitbewegen, kann der Riemen bzw. die Kette zur Erzielung einer schlupffreien Verbindung mit dem Werkstück an das Werkstück angedrückt werden, ohne dass eine Gleitreibung zwischen Andruckelement und dem Riemen bzw. der Kette auftritt. Dadurch kann z.B. die Bewegung eines Werkstücks genau und schlupffrei ermittelt werden. In einer weiteren Ausgestaltung könnte die Andruckeinrichtung aber auch als mitbewegter Riemen ausgeführt sein.

Die Schwenkachse des Trägers liegt in einer bevorzugten Ausführung in einem Bereich, der sich von einer durch die Drehachsen der Umlenkscheiben gebildeten Ebene in Richtung eines durch den Riemen bzw. die Kette gebildeten Anlagetrums zur Anlage an dem Werkstück erstreckt. Vorzugsweise ist die Schwenkachse dabei auf der zum Kontakt mit dem Werkstück ausgebildeten Außenseite des durch den Riemen bzw. die Kette gebildeten Anlagetrums in der Mitte zwischen den beiden Umlenkscheiben angeordnet. Dadurch können durch Unebenheiten des Werkstücks bedingte Messfehler besonders wirksam vermieden werden.

Eine genaue und stabile Lagerung des Trägers kann z.B. dadurch erreicht werden, dass der Träger über ein konvexes Lagerteil in einer dazu korrespondierenden, konkaven Lagerschale gelagert ist. Die Lagerschale kann durch eine Öffnung des Trägers hindurch ragen und an der Halterung befestigt sein.

Eine Verschiebung des Riemens bzw. der Kette in Richtung des Werkstücks bzw. von diesem weg kann dadurch erreicht werden, dass die Halterung über eine Linearführung verschiebbar an einem Gestell geführt und durch einen Antrieb verstellbar ist.

Zweckmäßigerweise werden die Andruckelemente durch eine Druckplatte gegen die Innenseite des Riemens gedrückt. Die Druckplatte kann zwischen den Kettenumlenkrädem angeordnet sein und ist derart ausgeführt, dass die Andruckelemente beim Überlauf über die Druckplatte gegen die Innenseite des Riemens gedrückt werden und diesen z.B. an die Unterseite eines Werkstücks anpressen. Hierzu kann die Druckplatte einen rampenförmigen Verlauf aufweisen. Die Druckplatte kann auch um eine horizontale Achse schwenkbar sein. Dadurch können die Andruckelemente auch an unregelmäßige Werkstücke gut angedrückt werden.

Um eine möglichst geringe Reibung zwischen den Andruckelementen und der Druckplatte zu erreichen, können an den Andruckelementen oder auch an den Verbindungselementen zwischen den Andruckelementen drehbar gelagerte Rollen zur Auflage an der Druckplatte angeordnet sein.

In einer besonders zweckmäßigen Ausgestaltung ist der Riemen über zwei in einer Ebene angeordnete Umlenkscheiben eine dazu versetzte dritte Scheibe geführt, wobei die dritte Scheibe durch Federn gegen die Innenseite des Riemens gedrückt wird.

Die vorstehend beschriebene Messvorrichtung ist vorzugsweise zur Erfassung der Bewegung eines Werkstücks an einer Plattenbearbeitungsanlage, einer Abbundanlage oder einer ähnlichen Holzbearbeitungsanlage einsetzbar. Hierzu wird der Riemen oder die Kette durch die mit diesen mitbewegte Andruckelemente z.B. an die Unterseite eines auf einer Werkstückauflage in Längsrichtung bewegten Werkstücks angedrückt. An mindestens einer der Umlenkscheiben des Riemens kann ein Sensor oder eine andere geeignete Einrichtung zur Erfassung deren Drehbewegung angeordnet sein. Durch Erfassung der Drehbewegung der vom Werkstück über den Riemen bzw. eine Kette angetriebenen Umlenkscheibe kann so die Bewegung des Werkstücks erfasst und schlupffrei gemessen werden. Die Bewegung des Riemens oder der Kette kann aber auch direkt durch andere geeignete Messeinrichtungen erfasst werden. So könnte z.B. auch die Anzahl der an einem geeigneten Detektor vorbeilaufenden Zähne eines Zahnriemens erfasst und zur direkten Messung der Riemenbewegung verwendet werden. Auch andere Messeinrichtungen zur Erfassung der Riemen- oder Kettenbewegung wären geeignet.

Weitere Besonderheiten und Vorzüge der Erfindung ergeben sich aus der folgenden Beschreibung eines bevorzugten Ausführungsbeispiels anhand der Zeichnung. Es zeigen:
- **Figur 1**: eine erfindungsgemäße Messvorrichtung in einer Ansicht von vorne;
- **Figur 2**: die Messvorrichtung von Figur 1 in einer Ansicht von hinten;
- **Figur 3**: die Messvorrichtung von Figur 1 in einer Seitenansicht;
- **Figur 4**: eine Schnittansicht entlang der Pfeile A-A von Figur 4 und
- **Figur 5**: die Messvorrichtung von Figur 3 in einer geschwenkten Stellung und
- **Figur 6**: ein Andruckelement in einer Seitenansicht.

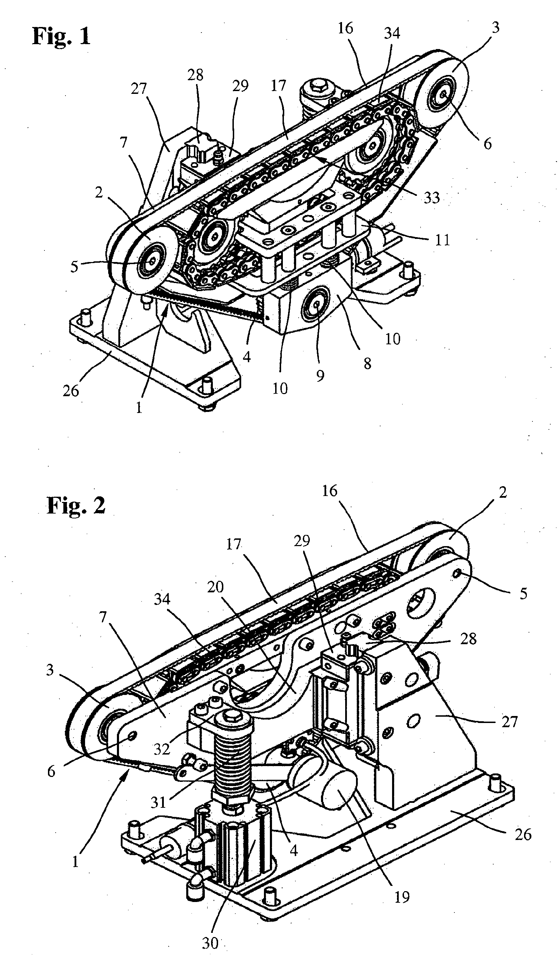

Die in den Figuren 1 und 2 in einer Vorder- und Rückansicht dargestellte Messvorrichtung enthält einen hier als Endlos-Zahnriemen ausgebildeten Riemen 1, der um zwei in einer Ebene liegende Umlenkscheiben 2 und 3 sowie eine dazu versetzte dritte Scheibe 4 geführt ist. Die beiden Umlenkscheiben 2 und 3 sind um Drehachsen 5 und 6 an einem plattenförmigen Träger 7 drehbar gelagert. Die Scheibe 4 ist innerhalb einer in Figur 1 erkennbaren Aufnahme 8 um eine Drehachse 9 drehbar gelagert. Die Aufnahme 8 ist durch zwei Federn 10 vorgespannt an einer an dem Träger 7 befestigten Halterung 11 montiert. Durch die beiden Federn 10 wird die Aufnahme 8 mit der darin drehbar gelagerten Scheibe 4 von der am Träger 7 befestigten Halterung 11 weg gegen die Innenseite des Riemens 1 gedrückt wird, so dass dieser gespannt ist.

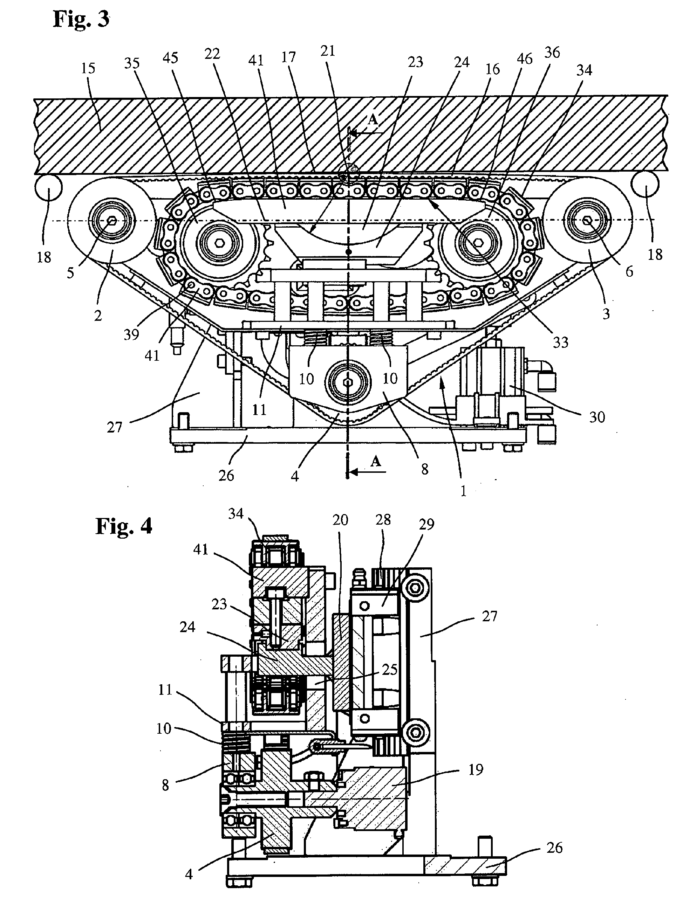

Die beiden Umlenkscheiben 2 und 3 und die Scheibe 4 sind als Zahnscheiben zum formschlüssigen Eingriff mit dem hier als Endlos-Zahnriemen ausgebildeten Riemen 1 ausgeführt. Die Riemenanordnung ist derart ausgestaltet, dass der zwischen den beiden Umlenkscheiben 2 und 3 verlaufende Bereich bzw. Trum des Riemens 1 als Anlagetrum 16 zur Anlage an einem in Figur 3 gezeigten Werkstück 15 dient und mit seiner Außenseite 17 zumindest teilweise zur Anlage an einer Fläche des Werkstücks 15 gelangt. Das z.B. als Holzbalken, Holzplatte oder dgl. ausgeführte Werkstück 15 liegt auf einer hier durch Transportwalzen gebildeten Rollenbahn oder einer anderen geeigneten Werkstückauflage 18 einer Plattenbearbeitungsanlage oder einer ähnlichen Holzbearbeitungsanlage auf und kann zur Bearbeitung durch eine hier nicht dargestellte Transportvorrichtung entlang der Werkstückauflage transportiert werden. Bei der Bewegung des Werkstücks 15 in Richtung seiner Längsachse wird der Riemen 1 durch reibschlüssige Anlage am Werkstück 15 mitgenommen und kann zur Erfassung der Bewegung des Werkstücks 15 eingesetzt werden.

Die Riemenanordnung ist bei dem gezeigten Ausführungsbeispiel also Teil einer Messeinrichtung zur Erfassung der Bewegung des in Längsrichtung bewegten Werkstücks 15, wobei hier die dritte Scheibe 4 mit einem Drehgeber oder einem anderen geeigneten Sensor 19 zur Erfassung der Drehbewegung der Scheibe 4 verbunden ist. Durch Erfassung der Drehbewegung der vom Werkstück 15 über den Riemen 1 angetriebenen Scheibe 4 kann so die Bewegung des Werkstücks 15 erfasst werden. Der in den Figuren 2 und 4 erkennbare Sensor 19 könnte aber auch an einer der Umlenkscheiben 2 und 3 angebracht sein.

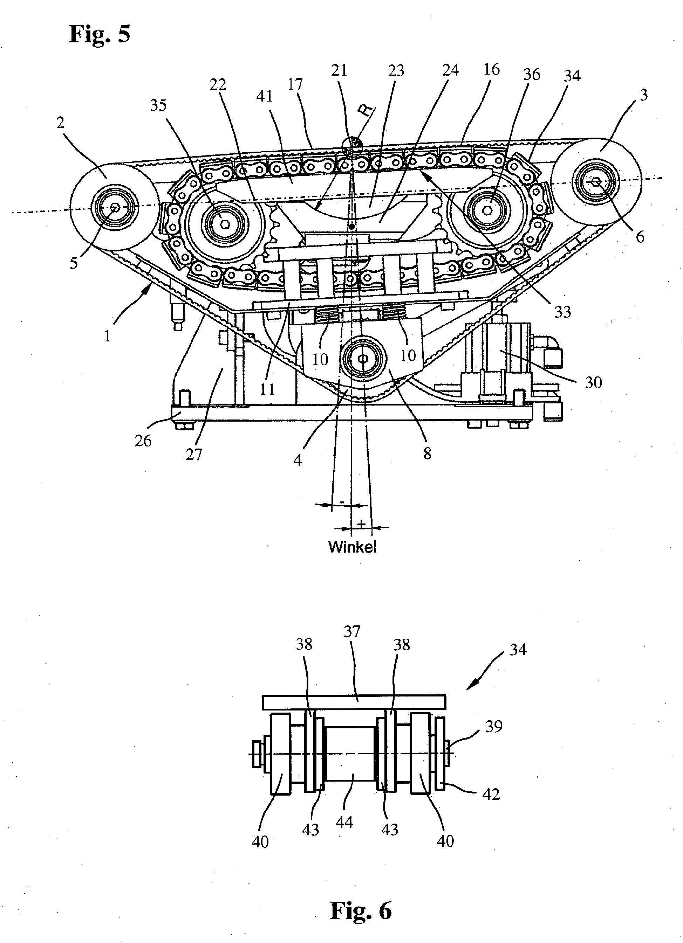

Wie besonders aus Figur 5 hervorgeht, ist der Träger 7 an einer in Figur 2 gezeigten plattenförmigen Halterung 20 derart schwenkbar gelagert, dass er um eine zur Bewegungsrichtung des Riemens 1 rechtwinklige (in Figur 5 zur Blattebene senkrechte) Schwenkachse 21 drehbar ist. Die Schwenkachse 21 des Trägers 7 liegt in einem Bereich, der sich von einer durch die Drehachsen 5 und 6 der Umlenkscheiben 2 und 3 gebildeten Ebene 22 in Richtung des durch den Riemen 1 gebildeten Anlagetrums 16 erstreckt. Bei der gezeigten Ausführung liegt die Schwenkachse 21 in der Mitte zwischen den beiden Umlenkscheiben 2 und 3 auf der zum Kontakt mit dem Werkstück 15 ausgebildeten Außenseite 17 des Riemens 1. Bei der gezeigten Ausführung kann die Schwenkbarkeit des Trägers 7 dadurch erreicht werden, dass der Träger 7 über ein konvexes Lagerteil 23 in einer dazu korrespondierenden, konkaven Lagerschale 24 gelagert ist.

In Figur 4 ist erkennbar, dass die Lagerschale 24 durch eine Öffnung 25 des Trägers 7 hindurch ragt und an der plattenförmigen Halterung 20 befestigt ist. Eine Zustellung des Riemens 1 in Richtung des Werkstücks 15 wird bei dem gezeigten Ausführungsbeispiel dadurch ermöglicht, dass die plattenförmige Halterung 20 über eine Linearführung verschiebbar an einer aus einer Bodenplatte 26 und einer Konsole 27 gebildeten Gestell geführt und durch einen Antrieb verstellbar ist.

Die Linearführung umfasst eine an der Konsole 27 befestigte Führungsschiene 28 und einen an der Führungsschiene 28 verschiebbar geführten Schlitten 29, der gemäß Figur 2 an einem Ende der plattenförmigen Halterung 20 befestigt ist. Der Antrieb enthält einen hydraulisch oder pneumatisch betätigbaren Stellzylinder 30, dessen Kolbenstange über eine Feder 31 und eine Halteplatte 32 mit dem anderen Ende der plattenförmigen Halterung 20 verbunden ist. Durch Ansteuerung des Stellzylinders 30 kann der Träger 7 gegenüber der Bodenplatte 26 angehoben oder abgesenkt und damit zum Werkstück 15 hin bzw. von diesem weg verfahren werden, wodurch die Anpressung des Anlagetrums 16 am Werkstück 14 verändert werden kann.

Um eine möglichst schlupffreie Mitnahme des Riemens 1 bei der Bewegung des Werkstücks 7 zu erreichen, wird der Anlagetrum 16 des Riemens 1 durch eine Andruckeinrichtung 33 gegen das Werkstück 15 gedrückt. Die Andruckeinrichtung 33 umfasst mehrere in Transportrichtung des Riemens 1 mit diesem mitbewegte Andruckelemente 34, die bei der gezeigten Ausführung Teil einer um zwei Kettenumlenkräder 35 und 36 geführten Endloskette sind. Bei der gezeigten Ausführung sind die beiden an dem Träger 7 drehbar gelagerten Kettenumlenkräder 35 und 36 als Zahnräder ausgeführt.

Die in Figur 6 dargestellten Andruckelemente 34 bestehen aus einem Grundkörper mit einem oberen Andruckteil 37 und zwei nach unten ragenden Schenkeln 38, durch die zwei Achsen 39 mit beidseitig drehbar gelagerten Rollen 40 zur Auflage auf einer in den Figuren 3 und 5 gezeigten Druckplatte 41 verlaufen. Durch eine auf den Enden der Achsen 39 sitzende äußere Kettenlasche 42 werden die Rollen 40 gehalten. Die Andruckelemente 11 sind durch in Figur 3 dargestellte innere Kettenlaschen 43 zu der über die Kettenumlenkräder 35 und 36 geführten Endloskette miteinander verbunden. Zwischen den inneren Kettenlaschen 43 ist eine Hülse 44 angeordnet.

Durch die an den Achsen 39 beidseitig des Andruckelements 34 angeordneten Rollen 40 gleiten die Andruckelemente 34 möglichst reibungs- und verschleißfrei auf der Druckplatte 41. Die zwischen den Kettenumlenkrädern 35 und 36 angeordnete Druckplatte 41 ist derart ausgeführt, dass die Andruckelemente 34 beim Überlauf über die Druckplatte 41 gegen den Riemen 1 gedrückt werden und diesen an die Unterseite des Werkstücks 7 anpressen. Hierzu weist die Druckplatte 41 einen besonders in Figur 3 erkennbaren rampenförmigen Verlauf mit einer in Bewegungsrichtung der Andruckelemente 34 schräg zu den Andruckelementen 34 hin ansteigenden vorderen Rampenfläche 45 und einer schräg abfallenden hinteren Rampenfläche 46 auf.

Bei der gezeigten Ausführung wird die vorstehend beschriebene Messvorrichtung zur Messung der Bewegung eines Werkstücks an einer Plattenbearbeitungsanlage oder einer ähnlichen Holzbearbeitungsanlage eingesetzt. Die Messvorrichtung ist in eine Transportbahn oder eine andere Werkstückauflage der Holzbearbeitungsanlage so integriert, dass der Anlagetrum 16 des Riemens 1 z.B. zur Anlage an der Unterseite des auf der Transportbahn aufliegenden und in Längsrichtung transportierten Werkstücks 15 gelangt. Selbstverständlich kann der Riemen auch an anderen Seitenflächen des Werkstücks 15 zur Anlage gelangen. Wird das Werkstück 15 durch eine hier nicht dargestellte Transportvorrichtung in Längsrichtung bewegt, wird der durch die Andrückelemente 34 an die Unterseite des Werkstücks 15 angedrückte Riemen 1 aufgrund der Reibung mitgenommen und überträgt seine Bewegung auf die Scheibe 4, an welcher der Sensor 19 zur Erfassung der Drehbewegung der Scheibe 4 angeordnet ist. Dadurch kann die Vorschubbewegung des Werkstücks 15 erfasst und gemessen werden. Da sich die Andruckelemente 34 zusammen mit dem Riemen 1 bewegen und keine Relativbewegung zwischen Andruckelementen 34 und Riemen 1 erfolgt, tritt keine Gleitreibung zwischen den Andruckelementen 34 und dem Riemen 1 auf.

Die vorstehend beschriebene Messvorrichturig ist nicht auf den ausführlich erläuterten Einsatzzweck beschränkt. So könnte die Riemenanordnung auch zum Transport eines Werkstücks eingesetzt werden, wenn z.B. einer oder mehrere der Umlenkscheiben angetrieben wird. Gleichzeitig kann auch hier eine Messung der Bewegung des Werkstücks erfolgen. Anstelle des Riemens 1 könnte außerdem auch eine Kette oder ähnliche Zugelemente verwendet werden, die über die vorstehend beschriebene Andruckeinrichtung 33 an das Werkstück 15 angedrückt werden und durch geeignete Reib- oder Formschlusselemente in schlupffreie Verbindung mit dem Werkstück 15 gelangen.

## Patentansprüche

1. Messvorrichtung zur Erfassung der Vorschubbewegung eines zu bearbeitenden Werkstücks (15), die einen bzw. eine an einem Träger (7) über Umlenkscheiben (2, 3) geführten Riemen (1) bzw. Kette, eine mit dem Riemen (1) bzw. der Kette in deren Bewegungsrichtung mitbewegte Andruckeinrichtung (33) zum Andrücken des Riemens (1) bzw. der Kette gegen das Werkstück (1) und einen Sensor (19) zur Erfassung der Bewegung des Riemens (1) oder der Kette enthält, wobei der Träger (7) an einer Halterung (20) um eine zur Bewegungsrichtung des Riemens (1) bzw. der Kette rechtwinklige Schwenkachse (21) drehbar ist, **dadurch gekennzeichnet, dass** die Andruckeinrichtung (33) mehrere durch Kettenlaschen (43) zu einer Endloskette miteinander verbundene und über mindestens zwei Kettenumlenkräder (35, 36) geführte Andruckelemente (34) umfasst.

2. Messvorrichtung nach Anspruch 1, **dadurch gekennzeichnet, dass** die Schwenkachse (21) des Trägers (7) in einem Bereich liegt, der sich von einer durch die Drehachsen (5, 6) der Umlenkscheiben (2, 3) gebildeten Ebene (22) in Richtung eines durch den Riemen (1) bzw. die Kette gebildeten Anlagetrums (16) zur Anlage an dem Werkstück (1) erstreckt.

3. Messvorrichtung nach Anspruch 2, **dadurch gekennzeichnet, dass** die Schwenkachse (21) auf der zum Kontakt mit dem Werkstück ausgebildeten Außenseite (17) des durch den Riemen (1) bzw. die Kette gebildeten Anlagetrums (16) in der Mitte zwischen den beiden Umlenkscheiben (2, 3) liegt.

4. Messvorrichtung nach einem der Ansprüche 1 bis 3, **dadurch gekennzeichnet, dass** der Träger (7) über ein konvexes Lagerteil (23) in einer dazu korrespondierenden, konkaven Lagerschale (24) gelagert ist.

5. Messvorrichtung nach Anspruch 4, **dadurch gekennzeichnet, dass** die Lagerschale (24) durch eine Öffnung (25) des Trägers (7) hindurch ragt und an der plattenförmigen Halterung (20) befestigt ist.

6. Messvorrichtung nach einem der Ansprüche 1 bis 5, **dadurch gekennzeichnet, dass** die Halterung (20) über eine Linearführung (28, 29) verschiebbar an einem Gestell (26, 27) geführt und durch einen Antrieb (30, 31) verstellbar ist.

7. Messvorrichtung nach Anspruch 6, **dadurch gekennzeichnet, dass** die Linearführung (28, 29) eine an einer Konsole (27) des Gestells befestigte Führungsschiene (28) und einen an der Führungsschiene (28) verschiebbar geführten Schlitten (29) umfasst, an dem die Halterung (20) befestigt ist.

8. Messvorrichtung nach einem der Ansprüche 6 oder 7, **dadurch gekennzeichnet, dass** der Antrieb (30, 31) einen hydraulisch oder pneumatisch betätigbaren Stellzylinder (30) enhält, dessen Kolbenstange über eine Feder (31) und eine Halteplatte (32) mit der Halterung (20) verbunden ist.

9. Messvorrichtung nach Anspruch 1, **dadurch gekennzeichnet, dass** die Kettenumlenkräder (35, 36) zwischen dem Umlenkscheiben (2, 3) an dem Träger (7) drehbar gelagert angeordnet sind.

10. Messvorrichtung nach Anspruch 1 oder 9, **dadurch gekennzeichnet, dass** die Andruckelemente (34) über eine Druckplatte (41) zum Andrücken der Andruckelemente (34) gegen die Innenseite des Riemens (1) geführt sind.

11. Messvorrichtung nach einem der Ansprüche 1, 9 oder 10, **dadurch gekennzeichnet, dass** an den Andruckelementen (34) drehbar gelagerte Rollen (40) angeordnet sind.

12. Holzbearbeitungsanlage mit mindestens einem Bearbeitungsaggregat und einer Messvorrichtung zur Messung der Vorschubbewegung eines zu bearbeitenden Holzwerkstücks, **dadurch gekennzeichnet, dass** die Messvorrichtung nach einem der Ansprüche 1 bis 11 ausgebildet ist.

13. Holzbearbeitungsanlage nach Anspruch 12, **dadurch gekennzeichnet, dass** die Messvorrichtung ober- und/oder unterhalb und/oder seitlich und/oder in Vorschubrichtung vor und/oder hinter dem mindestens einen Bearbeitungsaggregat angeordnet ist.

14. Holzbearbeitungsanlage nach Anspruch 12 oder 13, **dadurch gekennzeichnet, dass** die Messvorrichtung in eine Werkstückauflage (18) für das Werkstück (15) integriert ist.

## Claims

1. Measurement apparatus for the detection of the feed movement of a workpiece (15) that is to be processed and that contains a belt (1) or chain, which is guided on a carrier (17) via deflection disks (2, 3), a pressure device (33), which is moved along with the belt (1) or the chain in its movement direction so as to press the belt (1) or the chain against the workpiece (1), and a sensor (19) to detect the movement of the belt (1) or the chain, wherein the carrier (7) can rotate on a holder (20) around a swivel axis (21) at a right angle to the direction of movement of the belt (1) or the chain, **characterised in that** the pressure device (33) comprises several pressure elements (34), which are connected with one another by means of chain plates (43) to form an endless chain and which are guided via at least two chain deflection wheels (35, 36).

2. Measurement apparatus according to claim 1, **characterised in that** the swivel axis (21) of the carrier (7) lies in an area that extends from a plane formed by the rotating axes (5, 6) of the deflection disks (2, 3) in the direction of a placement section formed by the belt (1) or the chain for placement on the workpiece (1).

3. Measurement apparatus according to claim 2, **characterised in that** the swivel axis (21) on the outside (17) designed for contact with the workpiece of the placement section (16) formed by the belt (1) or the chain lies in the center between the two deflection disks (2, 3).

4. Measurement apparatus according to one of claims 1 to 3, **characterised in that** the carrier (7) is supported via a convex support part (23) in a concave support shell (24) corresponding to it.

5. Measurement apparatus according to claim 4, **characterised in that** the support shell (24) protrudes through an opening (25) of the carrier (7) and is fastened to the plate-shaped holder (20).

6. Measurement apparatus according to on of claims 1 to 5, **characterised in that** the holder (20) is guided via a linear guide (28, 29) in such a manner that it can be displaced on a frame (26, 27) and can be adjusted by means of a drive (30, 31).

7. Measurement apparatus according to claim 6, **characterised in that** the linear guide (28, 29) comprises a guide track (28), which is fastened to a console (27) of the frame, and a carriage (29), which is guided so it can be displaced on the guide track (28) and on which the holder (20) is fastened.

8. Measurement apparatus according to one of claims 6 or 7, **characterised in that** the drive (30, 31) contains a hydraulically or pneumatically actuatable adjustment cylinder (30), whose piston rod is connected with the holder (20) via a spring (31) and a holder plate (32).

9. Measurement apparatus according to Claim 1, **characterised in that** the chain deflection wheels (35, 36) are located between the deflection disks (2, 3) supported on the carrier (7) so they can rotate.

10. Measurement apparatus according to one of claims 1 or 9, **characterised in that** the pressure elements (34) are guided against the inside of the belt via a pressure plate (41) for the pressing of the pressure elements (34).

11. Measurement apparatus according to one of claims 1, 9 or 10, **characterised in that** on the pressure elements (34) there are rollers (40) located, which are supported so they can rotate.

12. Wood processing system with at least one processing unit and a measurement apparatus for the measurement of the feed movement of a wooden workpiece to be processed, **characterised in that** the measurement apparatus is designed according to one of claims 1 to 11.

13. Wood processing system according to claim 12, **characterised in that** the measurement apparatus is located above and/or below and/or laterally and/or in the feed direction before and/or behind the at least one processing unit.

14. Wood processing system according to one of claims 12 or 13, **characterised in that** the measurement apparatus is integrated into a workpiece support (18) for the workpiece (15).

## Revendications

1. Dispositif de mesure servant à détecter le déplacement d'avancement d'une pièce (15) à usiner, lequel contient une courroie (1) ou une chaîne guidée au niveau d'un système porteur (7) par l'intermédiaire de poulies de renvoi (2, 3), un système de pressage (33) déplacé par entraînement avec la courroie (1) ou la chaîne dans la direction de déplacement de cette dernière, servant à presser la courroie (1) ou la chaîne contre la pièce (1) et un capteur (19) servant à détecter le déplacement de la courroie (1) ou de la chaîne, dans lequel le système porteur (7) peut tourner au niveau d'un support (20) autour d'un axe de pivotement (21) situé à angle droit par rapport à la direction de déplacement de la courroie (1) ou de la chaîne, **caractérisé en ce que** le système de pressage (33) comprend plusieurs éléments de pressage (34) reliés les uns aux autres par des brides à chaîne (43) afin de former une chaîne sans fin et guidés par l'intermédiaire au moins de deux roues de renvoi de chaîne (35, 36).

2. Dispositif de mesure selon la revendication 1, **caractérisé en ce que** l'axe de pivotement (21) du système porteur (7) se trouve dans une zone, qui s'étend depuis un plan (22) formé par les axes de rotation (5, 6) des poulies de renvoi (2, 3), en direction d'un brin d'appui (16) formé par la courroie (1) ou la chaîne, servant à venir en appui au niveau de la pièce à usiner (1).

3. Dispositif de mesure selon la revendication 2, **caractérisé en ce que** l'axe de pivotement (21) se trouve sur le côté extérieur (17) réalisé pour venir en contact avec la pièce, du brin d'appui (16) formé par la courroie (1) ou la chaîne, au centre entre les deux poulies de renvoi (2, 3).

4. Dispositif de mesure selon l'une quelconque des revendications 1 à 3, **caractérisé en ce que** le système porteur (7) est monté, par l'intermédiaire d'une partie formant palier (23) convexe, dans une coque formant palier (24) concave correspondant à la partie formant palier.

5. Dispositif de mesure selon la revendication 4, **caractérisé en ce que** la coque formant palier (24) dépasse à travers une ouverture (25) du système porteur (7) et est fixée au niveau du support (20) en forme de plaque.

6. Dispositif de mesure selon l'une quelconque des revendications 1 à 5, **caractérisé en ce que** le support (20) peut être guidé de manière à pouvoir coulisser au niveau d'un châssis (26, 27) par l'intermédiaire d'un guidage linéaire (28, 29) et peut être ajusté par un entraînement (30, 31).

7. Dispositif de mesure selon la revendication 6, **caractérisé en ce que** le guidage linéaire (28, 29) comprend un rail de guidage (28) fixé au niveau d'une console (27) du châssis et un chariot (29) guidé de manière à pouvoir coulisser au niveau du rail de guidage (28), au niveau duquel le support (20) est fixé.

8. Dispositif de mesure selon l'une quelconque des revendications 6 ou 7, **caractérisé en ce que** l'entraînement (30, 31) contient un cylindre de réglage (30) pouvant être actionné de manière hydraulique ou pneumatique, dont la tige de piston est reliée au support (20) par l'intermédiaire d'un ressort (31) et d'une plaque de maintien (32).

9. Dispositif de mesure selon la revendication 1, **caractérisé en ce que** les roues de renvoi de chaîne (35, 36) sont disposées entre les poulies de renvoi (2, 3) en étant montées de manière à pouvoir tourner au niveau du système porteur (7).

10. Dispositif de mesure selon la revendication 1 ou 9, **caractérisé en ce que** les éléments de pressage (34) sont guidés par l'intermédiaire d'une plaque de pression (41) afin de presser les éléments de pressage (34) contre le côté intérieur de la courroie (1).

11. Dispositif de mesure selon l'une quelconque des revendications 1, 9 ou 10, **caractérisé en ce que** des galets (40) montés de manière à tourner sont disposés au niveau des éléments de pressage (34).

12. Installation d'usinage de bois comprenant au moins un groupe d'usinage et un dispositif de mesure servant à mesurer le déplacement d'avancement d'une pièce en bois à usiner, **caractérisée en ce que** le dispositif de mesure est réalisé selon l'une quelconque des revendications 1 à 11.

13. Installation d'usinage de bois selon la revendication 12, **caractérisée en ce que** le dispositif de mesure est disposé avant et/ou après l'au moins un groupe d'usinage, au-dessus et/ou en dessous et/ou à côté et/ou dans la direction d'avancement.

14. Installation d'usinage de bois selon la revendication 12 ou 13, **caractérisée en ce que** le dispositif de mesure est intégré dans un porte-pièce (18) pour la pièce (15).
